# EUROPEAN PATENT APPLICATION

(11) **EP 0 650 855 A1**
(43) Date of publication of application: **03.05.1995**
(21) Application number: 94307955.8
(22) Date of filing: 28.10.1994
(51) Int. Cl.: B60C 15/00, B29D 30/32

(54) **Pneumatic radial tires and method of producing the same**

(30) Priority: 28.10.1993 JP 270578/93; 09.02.1994 JP 36455/94; 26.04.1994 JP 88185/94; 08.09.1994 JP 214671/94
(71) Applicant: Bridgestone Corporation, Tokyo (JP)
(72) Inventor: Kawashima, Haruo, Kodaira City, Tokyo (JP); Uehara, Yoshikazu, Kodaira City, Tokyo (JP); Yasukouchi, Takashi, Kodaira City, Tokyo (JP); Chaen, Tatsuro, Kodaira City, Tokyo (JP); Matsuyama, Fumihiro, Sayama City, Saitama Pref. (JP)
(74) Representative: Lamb, Martin John Carstairs

(57) **Abstract**

A pneumatic radial tire comprises a radial carcass 4 of plural rubberized plies extending between bead cores 5 of the bead portions, in which at least one carcass ply of the rubberized plies is a turnup ply 4-1 extending between a pair of the bead cores 5 and wound around the bead core 5 from inside to outside, and the remaining carcass ply is a center-hollow down ply 4-2 constituted with a pair of rubberized ply segments extending from a position corresponding to each side region of the tread portion 3 other than a central region thereof beneath an inner surface of the belt up to a position corresponding to at least a side edge of an inner peripheral surface of the bead core 5 and develops the steering stability, ride comfortablility and weight reduction at higher level.

## Description

### BACKGROUND OF THE INVENTION

### Field of the Invention

This invention relates to a pneumatic radial tire comprising a pair of bead portions, a pair of sidewall portions, a tread portion toroidally extending between the sidewall portions, a radial carcass of plural rubberized plies extending between bead cores of the bead portions, and a belt of two cross cord layers superimposed about a crown portion of the carcass and reinforcing the tread portion as well as a production method for forming a green case for uncured tire by assembling and building uncured members of radial carcass plies and bead core among the structural members of the above tire.

### Description of the Related Art

In accordance with recent tendency of everyday high-speed running, relatively small-size four-wheeled vehicles such as passenger cars and the like are aimed at more improvement of steering stability inevitable in the safe running in addition to comfortable running. As a result, pneumatic radial tires finally controlling good or bad of such a performance are strongly demanded to develop an excellent steering stability.

As to the improvement of this steering stability, there have hitherto been taken various countermeasures. Particularly, it is fundamentally required to enhance lateral rigidity (lateral spring constant) as a characteristic showing a degree of resistance to lateral deformation in a rotating axial direction of the tire in the cornering or to enhance bending rigidity of a sidewall portion, so that it is common to use two or more plies as a radial carcass in this type of the tire. Because, the tire of this type is simultaneously required to fully maintain the ride comfortability against vibrations, so that it is common to use a rubberized ply of organic fiber cords having a low rigidity as a carcass ply and hence the use of one ply as a carcass ply is insufficient in order to ensure the lateral rigidity.

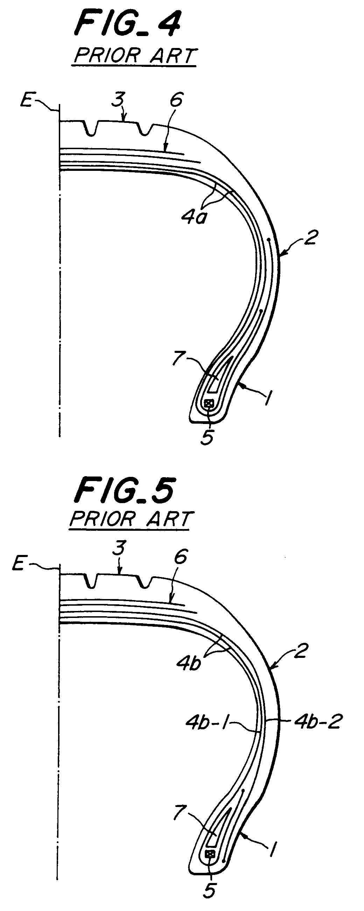

As an example of the carcass structure using two or more plies, there is widely adopted a so-called simultaneous two-ply turnup structure in which carcass plies 4a (2 plies in an illustrated embodiment) are turned around a bead core 5 from inside of the tire toward outside thereof as shown in Fig. 4 at a right-half section in widthwise direction of the tire. In this structure, however, the lateral rigidity of the tire is obliged to fix to a compromising value by the adjustment of turnup height considering a balance with longitudinal rigidity (longitudinal spring constant) strongly contributing to the ride comfortability against vibrations, so that the simultaneous turnup structure has such a disadvantageous point that if the turnup height is set to a higher level, the value of lateral rigidity is raised to improved the steering stability and at the same time the value of longitudinal rigidity is raised to degrade the ride comfortability, while the low turnup height brings about the degradation of the steering stability. In Fig. 4, numeral 1 is a bead portion, numeral 2 a sidewall portion, numeral 3 a tread portion, numeral 6 a belt, numeral 7 a stiffener rubber or a bead filler rubber, and symbol E an equatorial plane of the tire. Throughout the different figures of the drawing, like parts are designated by like numerals and symbols.

In order to avoid the above disadvantageous point, there is frequently adopted a so-called up-down structure in which at least one ply among carcass plies 4b (1 ply in illustrated embodiment) is a turnup ply 4b-1 having a turnup portion and the remaining outer plies (1 ply in illustrated embodiment) is a down ply 4b-2 having a lower end located in the vicinity of bead core 5 (bead heel portion in illustrated embodiment) without turnup portion as shown in Fig. 5 at a right-half section in widthwise direction of the tire.

The up-down structure has an advantage capable of realizing a balance between lateral rigidity and longitudinal rigidity of the tire inflated at a given internal pressure under more advantageous conditions. For example, it is not required to take the same care as considered in the simultaneous turnup structure in the setting of turnup height. Furthermore, the degree of freedom in the design on the adjustment of desirable balance between lateral rigidity and longitudinal rigidity can more be widened by adjusting the position of the lower end of the down ply 4b-2 in up-down direction from the illustrated position, or by turning the lower end around the bead core from outside toward inside to terminate in the vicinity of the bead core 5, or the like.

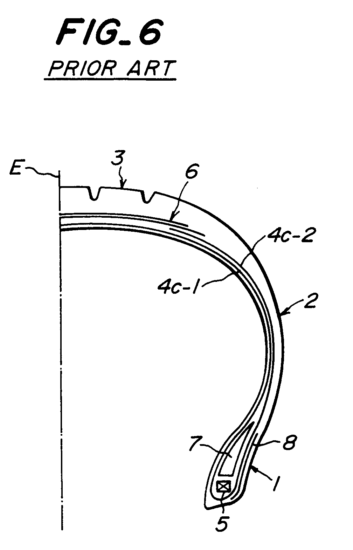

In addition to the above simultaneous turnup structure and up-down structure, there is known a special high-turnup structure that a turnup portion 4c-2 of a carcass ply 4c is extended to a tread portion 3 and a turnup end is located between a belt 6 and a main body 4c-1 of the carcass ply 4c as shown in Fig. 6 at a right-half section in widthwise direction of the tire. However, this tire having the carcass ply 4c is undeniable to degrade the steering stability based on the lacking of lateral rigidity at a region ranging from a bead portion 1 to a sidewall portion 2 as compared with the case of the aforementioned two structures, so that it is necessary to add extra members such as additional reinforcing layer 8 and the like as shown in Fig. 6 in case of middle to large size tires rather than small size tire.

In the pneumatic radial tire, it is required to conduct more reduction of tire weight contributing to tendency of attaining low fuel consumption of a vehicle as a basic performance in addition to the above two performances. In this connection, it is strongly demanded that radial tires for relatively small size four-wheeled vehicles such as passenger cars and so on possess at least three performances such as excellent steering stability, good ride comfortability against vibrations and remarkable weight reduction. However, tires having the aforementioned carcass ply structures do not fully satisfy the above demand. Therefore, it is expected to develop pneumatic radial tires simultaneously possessing the above performances.

On the other hand, tire manufacturers are naturally required to more improve the productivity at an uncured structural member assembling step of carcass ply and bead core requiring greatest stage number among various tire building steps and to render percentage of rejects at vulcanization building into zero (zero defect) in addition to the simultaneous improvement of the above performances. There are the following knowledges on each of the above carcass ply structures obtained up to the present in connection with the above performances. Moreover, an assembly of carcass ply member (provided at its inner surface with an innerliner) and bead core member at the assembling step is called as a green case (excluding a belt 6) for convenience' sake throughout the specification.

The carcass 4a of the simultaneous turnup structure is a best structure on the productivity and percentage of rejects at the vulcanization building, but is a structure unsuitable for the establishment of the steering stability and ride comfortability as previously mentioned.

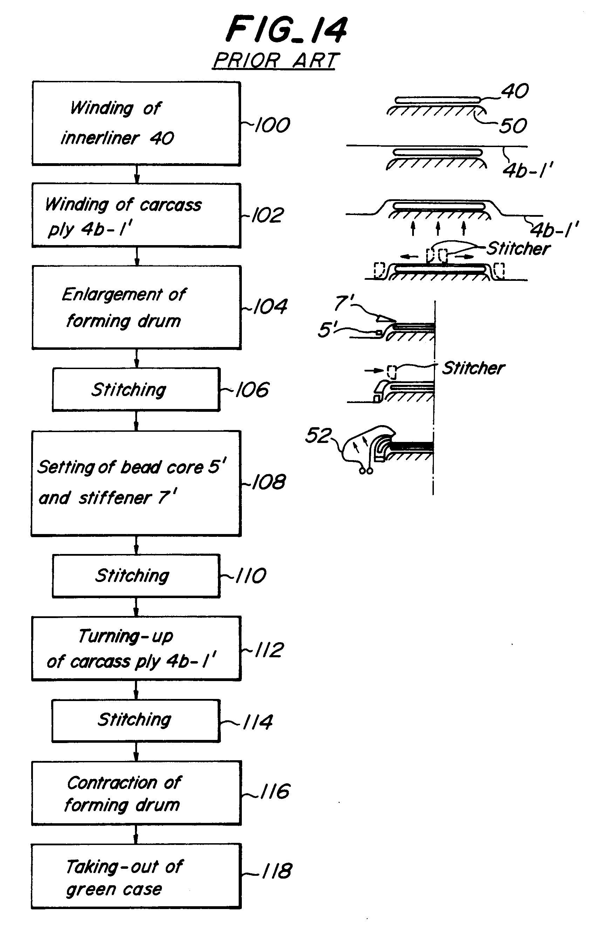

The carcass ply 4b of the up-down structure including a case that the down ply 4b-2 terminates at bead heel as shown in Fig. 5 and a case that the down ply 4b-2 is turned around the bead core 5 from outside toward inside is inferior to the simultaneous turnup structure in the productivity at the assembling step, which is described below with reference to Fig. 14.

The assembling step of the turnup ply 4b-1 member and bead core member 5 for the up-down structure is shown as a flow chart of each working stage in a left side of Fig. 14 and as a simplified section corresponding to each stage in a right side of Fig. 14.

The assembling step of Fig. 14 comprises a step 100 of winding an innerliner member 40 on an outer periphery of a forming drum 50, a step 102 of winding a turnup ply member 4b-1' around the innerliner member 40, a step 104 of enlarging a diameter of the forming drum 50, a stitching step 106 of removing air pockets between the turnup ply member 4b-1' and the innerliner member 40 and conducting preforming of both side portions of the turnup ply member 4b-1'along both side portions of the forming drum 50, a step 108 of attaching a bead core member 5' and a stiffener rubber or filler rubber member 7', a step 110 of preforming these members 5', 7' by stitching, a step 112 of expanding a side bladder 52 to turn the turnup ply member 4b-1' around the bead core member 5', a step 114 of stitching the turnup portion, a step 116 of contracting the forming drum 50, and a step 118 of taking out a green case. Moreover, when a sidewall rubber member is added to the green case, a step of attaching the sidewall rubber member is arranged between the steps 112 and 114.

If it is intended to wind a down ply member 4b-2' (not shown), it is necessary to repeat the steps 102-106, 112 and 114 after the completion of the above step 112, which results in the obstruction of the productivity at the above assembling step. Furthermore, if the down ply member 4b-2' is turned around the bead core member 5', the operation at the illustrated flow chart is impossible, so that it is required to separately conduct the turning operation after the taking-out of the incomplete green case, which remarkably obstructs the productivity.

Nevertheless, the pneumatic radial tires having the up-down carcass structure are advantageous in the ride comfortability against vibrations and can be expected to develop an excellent steering stability. Particularly, it should be noticed that the pneumatic radial tire having such a structure that the down ply 4b-2 is turned around the bead core 5 may attain the more improvement of the steering stability. However, these tires do not sufficiently satisfy the demand of weight reduction, so that there is yet room for improvement in this point.

In the pneumatic radial tires having the special high-turnup carcass structure, it is required to separately add the member 8, but also a ratio of standing out carcass cords in the inner surface of the tire during the vulcanization building of an uncured tire or a so-called "cord expose" reject ratio tends to become high as compared with the other carcass structures. Because, the turnup portion 4c-2 is turned up to a considerably high level and closely fixed between the belt 6 and the main carcass body 4c-1 and hence the tension bearing of the cord in the main carcass body 4c-1 becomes considerably higher as compared with those of the other carcass structures. Therefore, the special high-turnup structure can not be said to be favorable from a viewpoint of zero percentage of rejects.

### SUMMARY OF THE INVENTION

It is, therefore, an object of the invention to solve the aforementioned problems and to provide a pneumatic radial tire possessing excellent steering stability, good ride comfortability against vibrations and more weight reduction, which can sufficiently cope with the above demands, and having such a carcass structure that there is no fear of creating rejects in the production as well as a method of conducting the assembling of members on the carcass structure with high efficiency and precision.

According to the invention, there is the provision of in a pneumatic radial tire comprising a pair of bead portions, a pair of sidewall portions, a tread portion toroidally extending between the sidewall portions, a radial carcass of plural rubberized plies extending between bead cores of the bead portions, and a belt of two cross cord layers superimposed about a crown portion of the carcass and reinforcing the tread portion, the improvement wherein at least one carcass ply of the rubberized plies is wound around a bead core from inside of the tire toward outside thereof to form a turnup portion as a turnup ply extending between a pair of the bead cores, and the remaining carcass ply is a center-hollow down ply constituted with a pair of rubberized ply segments in which each ply segment is arranged outside the turnup ply and extends from a position corresponding to each side region of the tread portion other than a central region thereof beneath an inner surface of the belt over an upper end of the turnup portion up to at least a position corresponding to a side edge of an inner peripheral surface of the bead core.

### BRIEF DESCRIPTION OF THE DRAWINGS

The invention will be described with reference to the accompanying drawings, wherein:
Fig. 1 is a diagrammatically right-half sectional view of a first embodiment of the pneumatic radial tire according to the invention;
Fig. 2 is a diagrammatically right-half sectional view of a second embodiment of the pneumatic radial tire according to the invention;
Fig. 3 is a diagrammatically right-half sectional view of a third embodiment of the pneumatic radial tire according to the invention;
Fig. 4 is a diagrammatically right-half sectional view of a first embodiment of the conventional pneumatic radial tire;
Fig. 5 is a diagrammatically right-half sectional view of a second embodiment of the conventional pneumatic radial tire;
Fig. 6 is a diagrammatically right-half sectional view of a third embodiment of the conventional pneumatic radial tire;
Fig. 7 is a schematically upper-half sectional view of a first step in the production method according to the invention;
Fig. 8 is a schematically upper-half sectional view of a second step in the production method according to the invention;
Fig. 9 is a schematically upper-half sectional view of a third step in the production method according to the invention;
Fig. 10 is a diagrammatically sectional view of a first embodiment of the green case obtained through the steps of Figs. 7-9;
Fig. 11 is a schematically upper-half sectional view of a step in the another production method according to the invention;
Fig. 12 is a diagrammatically sectional view of a second embodiment of the green case obtained through the step of Fig. 11;
Fig. 13 is a schematically upper-half sectional view illustrating the other production method according to the invention; and
Fig. 14 is a view illustrating the conventional production method.

### DESCRIPTION OF THE PREFERRED EMBODIMENTS

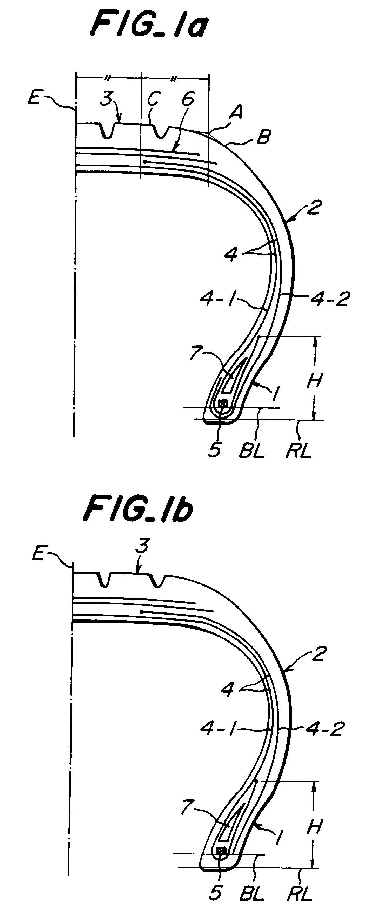

A first embodiment of the pneumatic radial tire according to the invention is shown in Figs. 1a and 1b as a right-half section in the widthwise direction of the tire. In this case, a carcass 4 of plural rubberized plies (2 plies in the illustrated embodiment) consists of a turnup ply 4-1 extending between a pair of bead cores 5 and a center-hollow down ply 4-2 arranged outside the turnup ply 4-1 and constituted with a pair of rubberize ply segments in which each ply segment is extends from a position corresponding to each side region of a tread portion 3 other than a central region thereof beneath an inner surface of a belt 3 over an upper end of the turnup portion up to a turned position around the bead core 5 in case of Fig. 1a or a position corresponding to an inner peripheral surface of the bead core 5.

In this figure, symbol A indicates a position of each widthwise end defining a tread width and is represented by an intersect between extended lines of tread crown C and buttress B. The central region of the tread portion 3 indicates two central parts defined by dividing the tread width into four equal parts. The term "center-hollow" used herein means a removal of a portion of the down ply corresponding to at least two central parts of the tread portion 3. An innerliner (not shown) is disposed on an inner surface of an innermost ply among the plies of the carcass 4 irrespectively of tubeless tire and tubed tire.

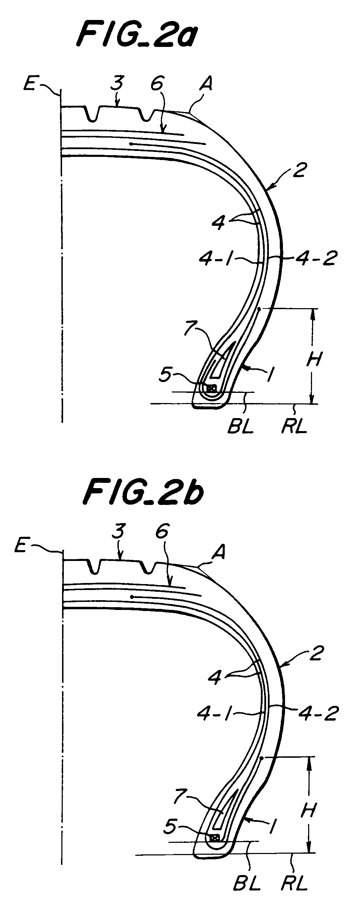

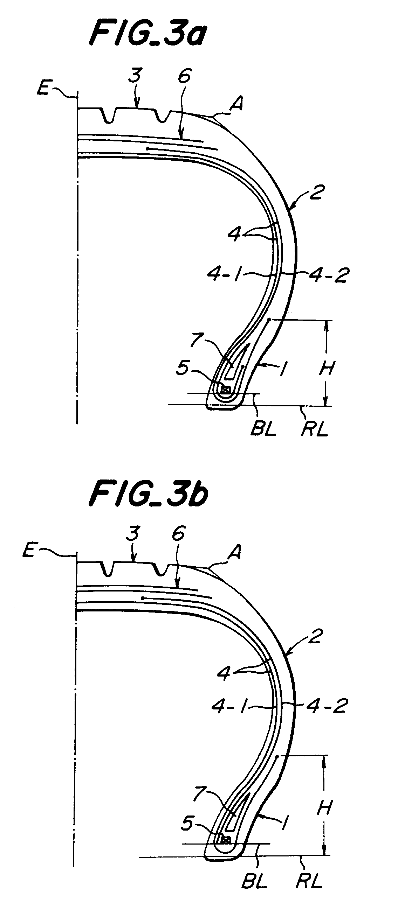

Another embodiments of the pneumatic radial tire according to the invention are shown in Figs. 2a and 2b and Figs. 3a and 3b, respectively. In the tires of Figs. 2a and 2b, the turnup portion of the turnup ply 4-1 in the carcass 4 is located outside the down ply 4-2. In the tires of Figs. 3a and 3b, the down ply 4-2 is arranged along the main carcass body of the turnup ply 4-1. The carcass 4 shown in Fig. 3 is adaptable to middle - large size radial tires having a tire section width of not less than 195 (according to JATMA YEAR BOOK, 1992).

According to the invention, it is desired that the cords in each of the plies 4-1 and 4-2 of the carcass 4 have a cord inclination angle within a range of 90-75°, preferably 90-80° with respect to an equatorial plane E of the tire. Therefore, it is favorable that a cross cord angle between the plies is within a range of 0-30°, preferably 0-10°. Moreover, different kinds of the cords, such as different cord deniers, different end counts and the like can be applied to respective plies 4-1 and 4-2.

The structures of the carcass 4 shown in Figs. 1b, 2b and 3b are adaptable to tires aiming at the more weight reduction (cost down) while accepting a somewhat degradation of the steering stability, in which the ride comfortability against vibrations is somewhat improved.

As a method of producing the pneumatic radial tire according to the invention, there are the following five methods in the assembling of uncured members of rubberized cord plies and bead core for the tire on an outer peripheral surface of a forming drum consisting of a freely enlargeable main drum and a pair of auxiliary drums located adjacent to both sides of the main drum and freely expanding in a radial direction in which the main drum and auxiliary drums are rotated at the same outer diameter before the enlargement and the expansion.

That is, a first method lies in that a pair of down ply segment members each having a length equal to an outer peripheral length of the auxiliary drum are wound on the auxiliary drums, respectively, and then a continuous turnup ply member having a width wider than a width of the main drum is distributed on both sides of the main drum with respect to a widthwise central periphery thereof at an equal width and wound around the down ply segment members by a round to join both free cut ends to each other.

A second method lies in that a turnup ply member having a length equal to an outer peripheral length of the main drum and a width wider than a width of the main drum is distributed on both sides of the main drum with respect to a widthwise central periphery thereof at an equal width and wound on the main drum, and then a pair of continuous down ply segment members are piled on both end portions of the turnup ply member and wound on the auxiliary drums by a round to join both free cut ends of the down ply segment member to each other.

A third method lies in that a pair of down ply segment members each having a length equal to an outer peripheral length of the auxiliary drum are piled on lower surfaces of both sides of a continuous turnup ply member having a width wider than a width of the main drum while the turnup ply member is distributed on both sides of the main drum with respect to a widthwise central periphery thereof at an equal width and then wound together by a round of the turnup ply member to join both free cut ends of the turnup ply member to each other.

A fourth method lies in that a pari of continuous down ply segment members are piled on upper surfaces of both sides of a turnup ply member having a length equal to an outer peripheral length of the main drum and a width wider than a width of the main drum while the turnup ply member is distributed on both sides of the main drum with respect to a widthwise central periphery thereof at an equal width and then wound together by a round of the down ply segment member to join both free cut ends of the down ply segment member to each other.

A fifth method lies in that a composite ply member formed by sticking both end portions of a turnup ply member with end portions of a pair of down ply segment members at a given overlapping quantity is wound by a round to join both free ends to each other.

After the above step in all of the first to fifth methods, the main drum is enlarged to a diameter larger than a maximum wound diameter of the ply segment member on the auxiliary drum to place a pair of bead core members on ply member portions laid on both stepped side portions of the enlarged main drum, and thereafter the auxiliary drum is expanded and at the same time a pair of cylindrical pushing members alerted outside each auxiliary drum in a rotating axial direction thereof are moved inward in the rotating axial direction to forcedly conduct compression deformation of the expanded auxiliary drum inward in the rotating axial direction, whereby each ply member located outside the bead core is turned around the bead core to form a cylindrical green case for an uncured tire.

As another method of producing the pneumatic radial tire according to the invention, there are the following five methods in the assembling of uncured members of rubberized cord plies and bead core for the tire on an outer peripheral surface of a forming drum consisting of a freely deformable main drum expanded by filling of pressurized fluid, a pair of freely enlargeable pushing members against an inner peripheral surface of a bead core member located adjacent to both sides of the main drum and a pair of freely deformable auxiliary drums located adjacent to the pushing members and expanded by filling of pressurized fluid in which the main drum, auxiliary drums and pushing members are rotated at the same outer diameter before the enlargement and the expansion.

That is, a sixth method lies in that a pair of down ply segment members each having a length equal to an outer peripheral length of the auxiliary drum are wound on the auxiliary drums, respectively, and then a continuous turnup ply member having a width wider than a width of the main drum is distributed on both sides of the main drum with respect to a widthwise central periphery thereof at an equal width and wound around the down ply segment members by a round to join both free cut ends to each other.

A seventh method lies in that a turnup ply member having a length equal to an outer peripheral length of the main drum and a width wider than a width of the main drum is distributed on both sides of the main drum with respect to a widthwise central periphery thereof at an equal width and wound on the main drum, and then a pair of continuous down ply segment members are piled on both end portions of the turnup ply member and wound on the auxiliary drums by a round to join both free cut ends of the down ply segment member to each other.

An eighth method lies in that a pair of down ply segment members each having a length equal to an outer peripheral length of the auxiliary drum are piled on lower surfaces of both sides of a continuous turnup ply member having a width wider than a width of the main drum while the turnup ply member is distributed on both sides of the main drum with respect to a widthwise central periphery thereof at an equal width and then wound together by a round of the turnup ply member to join both free cut ends of the turnup ply member to each other.

A ninth method lies in that a pari of continuous down ply segment members are piled on upper surfaces of both sides of a turnup ply member having a length equal to an outer peripheral length of the main drum and a width wider than a width of the main drum while the turnup ply member is distributed on both sides of the main drum with respect to a widthwise central periphery thereof at an equal width and then wound together by a round of the down ply segment member to join both free cut ends of the down ply segment member to each other.

A tenth method lies in that a composite ply member formed by sticking both end portions of a turnup ply member with end portions of a pair of down ply segment members at a given overlapping quantity is wound by a round to join both free ends to each other.

After the above step in all of the sixth to tenth methods, the pushing members are enlarged to strongly sandwich the ply members between the outer peripheral surface of the enlarged pushing member and the inner peripheral surface of the bead core member, and at the same time pressurized fluid is filled in each of the drums to expandably deform the drums and then the pushing members are moved inward in a rotating axial direction of the drum to narrow a distance between the pair of the bead core members and a distance between the pair of the auxiliary drums, whereby the ply members located outside the bead core member are turned around the bead core member by the expansion deformed portion of the auxiliary drum and the turned ply member portions are pressed on the ply member existing on the main drum to form a toroidal green case for an uncured tire.

In the practice of the first to tenth methods, it is preferable that the innerliner rubber member is previously attached to the turnup ply member or the innerliner rubber member is previously wound around the main drum, that the stiffener rubber or bead filler rubber member is previously united with the bead core member, that the overlapping width between the turnup ply member and the down ply segment member (overlap width) W is a value by adding 0-50 mm, preferably 0-20 mm to an upper end height H of the turnup portion as measured from a rim size line RL for the pneumatic radial tire (see Figs. 1a and 1b and Figs. 2a and 2b), and that guide means for accurately guiding both edges of each ply member is used for exactly holding a position relation between the ply members and apposition relation between the ply member and the forming drum.

In the practice of the fifth to tenth methods, it is adaptable that the length of the composite ply member is previously made equal to the outer peripheral length of the main drum or that the continuous composite ply member is wound around the forming drum by a round and then cut for joining both cut free ends to each other.

### (1) Pneumatic radial tires

By rendering an outer carcass ply into a center-hollow down ply 4-2, the more weight reduction of the tire can effectively be realized as compared with the conventional up-down carcass structure and also the ride comfortability against vibrations is more improved owing to the adequate decrease of the rigidity at the central region of the tread portion 3 and the decrease of vibration applied from road surface accompanied with the reduction of weight (mass) at such a region.

On the other hand, the upper end portion of the down ply 4-2 is fixed between the belt 6 and the turnup ply 4-1 and the lower end portion thereof is extended to at least a position of the inner peripheral surface of the bead core 5 (position shown by lateral line BL in Figs. 1-3), so that the upper end portion of the down ply 4-2 is at a fixed state between the belt 6 of high rigidity sufficiently controlling the expansion in the radial direction of the tire and the turnup ply 4-1 causing expansion in the same direction under the inflation of internal air pressure, while the lower end portion thereof is at a fixed state between a flange of a rim suitable for the tire (not shown) and a side face of the rigid bead core 5 causing expansion outward. As a result, the cords of the down ply properly bear high tension between both end portions to sufficiently provide lateral rigidity, whereby pneumatic radial tires developing desired high steering stability can be realized.

In order to more ensure the fixed state of the lower end portion and more enhance the rigidity of the bead portion 1, the lower end portion is turned around the bead core 5 as shown in Fig. la or extended so as to cover the inner peripheral surface of the bead core 5, whereby the steering stability can be more improved. Furthermore, similar effect is obtained by properly selecting a turnup height H of the turnup ply 4-1. Therefore, the degree of freedom in the design for the selection or combination of the above constructions can be widened by considering the balance of the performances.

Moreover, the features that the cross cord angle between the plies 4-1 and 4-2 is 0-30°, preferably 0-10° and that the kind and end count of cords are different between the plies 4-1 and 4-2 effectively act to favorably adjust the balance among the steering stability, ride comfortability and weight reduction.

### (2) Production method

By winding the turnup ply member and the pari of down ply segment members on the outer periphery of the forming drum as defined in each of the first to tenth methods, the winding operation efficiency of each ply member on the forming drum is considerably improved and the piling accuracy between ply members is more improved, so that positions of edges of the plies 4-1 and 4-2 can satisfy the target designing value and hence it is possible to ensure the development of anticipated performances and the maintenance of the durability.

After the winding of the turnup ply member and the pair of down ply segment members, the enlargement or expansion of the main drum and expansion of the auxiliary drum and expansion and movement of the pushing member are carried out by each of the first to tenth methods, whereby it is possible to simultaneously turn each of the ply members around the bead core member while accurately enveloping the bead core member in a proper place inside the ply member at the same step. As a result, extra repeating operation and/or additional operation at the assembling step, which could not be avoided in the conventional technique, can completely be removed in addition to the winding of the ply members on the forming drum with a high efficiency as previously mentioned, whereby the cylindrical green case for the uncured tire in case of the first to fifth methods or the toroidal green case for the uncure tire in case of the fifth to tenth methods can be obtained in a considerably high productivity.

Furthermore, the efficiency of assembling operation is more improved when the innerliner rubber member is previously attached to the turnup ply member and the stiffener rubber or bead filler rubber member is previously united with the bead core member.

Particularly, the position of the lower end portion of the down ply 4-2 in the pneumatic radial tire according to the invention can accurately be controlled when the overlapping width W between the turnup ply member and the down ply member is a value obtained by adding 0-50 mm, preferably 0-20 mm to the upper end height H of the turnup portion in case of the tires shown in Figs. 1a and 1b and Figs. 2a and 2b.

When each of the ply members is supplied to the forming drum, the position accuracy of the ply members to be oiled one upon the other can be more enhanced by using the guide means for accurately guiding both edges of the ply member in order to exactly hold the position relation between the ply members and the position relation between the ply member and the forming drum.

The following examples are given in illustration of the invention and are not intended as limitations thereof.

### (1) Pneumatic radial tires

There are provided six tubeless type radial tires for passenger cars having a tire size of 205/65 R15 and a structure shown in Figs. 1-3, in which Example 1 is a case of Fig. 1a, Example 2 is a case of Fig. 1b, Example 3 is a case of Fig. 2a, Example 4 is a case of Fig. 2b, Example 5 is a case of Fig. 3a and Example 6 is a case of Fig. 3b. The two carcass plies 4-1 and 4-2 constituting the radial carcass are rubberized plies containing polyester cords of 1000 d/2 arranged at a cord angle of 90°with respect to the equatorial plane E of the tire. The end count in each ply is 55 cords/5 cm at a stage just before the assembling of the plies. Moreover, the belt is comprised of two cross steel cord layers. In all examples, the turnup height H is 73 mm. In each example, the tread width is 160 mm and the width of the belt 6 is 168 mm. Moreover, a distance between upper ends of the down ply segments 4-2 is set to 140 mm, and the turnup height of the lower end thereof is 20 mm as measured from the straight line BL.

For the comparison, there are provided 3 comparative tires having a structure shown in Figs. 4-6, in which Comparative Example 1 is a case of Fig. 4, Comparative Example 2 is a case of Fig. 5 and Comparative Example 3 is a case of Fig. 6. Each comparative tire has the same structure as in the example except for the carcass structures 4a, 4b and 4c. The tire of Comparative Example 1 is a so-called high-turnup type tire attaching importance to the steering stability because the turnup height of the carcass ply is set to 73 mm.

The tire weight is first measured with respect to each test tire of Examples 1-6 and Comparative Examples 1-3. Then, the steering stability and ride comfortability against vibrations are evaluated by an actual running test under the following test conditions.
- Test vehicle:: passenger car having a displacement of 2000 cc
- Test road:: dry paved road
- Internal pressure, load:: standard internal pressure for the test vehicle, 2 passengers
- Test speed:: 40-60 km/hr

### Evaluation method:

The test vehicle provided with four test tires is steered by a professional test driver, during which lane-change and curved running are carried out to evaluate each of the steering stability and ride comfortability against vibrations by feeling points. The results are shown in Table 1 by an index value on the basis that the tire of Comparative Example 1 is 100, in which the larger the index value, the better the steering stability and ride comfortability, while the smaller the index value, the better the weight reduction.

**Table 1**

| | Example | | | | | | Comparative Example | | |
|---|---|---|---|---|---|---|---|---|---|
| | 1 | 2 | 3 | 4 | 5 | 6 | 1 | 2 | 3 |
| Steering stability | 95 | 94.5 | 96 | 95.5 | 96 | 95.5 | 100 | 85 | 93 |
| Ride comfortability against vibrations | 115 | 117 | 114 | 116 | 114 | 116 | 100 | 120 | 112 |
| Tire weight | 96 | 95.5 | 96 | 95.5 | 96 | 95.5 | 100 | 98 | 95 |

As seen from Table 1, the tires of Examples 1-6 are somewhat inferior to the tire of Comparative Example 1 in the steering stability but are considerably excellent in the ride comfortability and weight reduction as compared with the tire of Comparative Example 1, so that they realize simultaneous improvement of the above three requirements at an excellent balance. On the other hand, the tires of all examples exhibit excellent results on both the performances and weight reduction as compared with the tire of Comparative Example 2. Furthermore, the tires of all examples are substantially equal to the tire of Comparative Example 3 in the performances and weight reduction, but the inconvenience is not caused at the stage of tire production, while Comparative Example 3 frequently causes cord exposure reject and is unsuitable in practical use. Moreover, the weight reduction in all examples contributes to reduce the cost and the rolling resistance.

### (2) Production Method

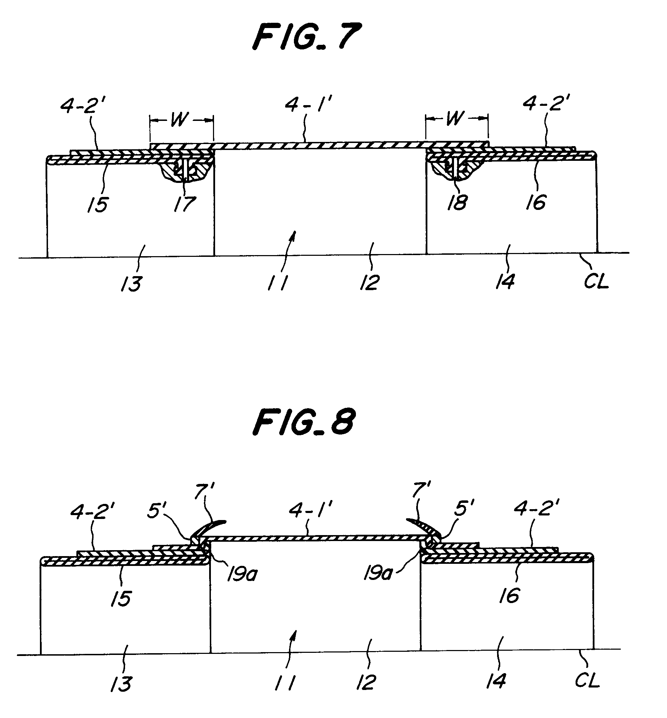

The members such as carcass ply member and the like to be used in this method are used for the manufacture of the tire described in Examples 1-6. Moreover, the turnup ply member used herein means a member obtained by previously attaching an innerliner rubber member having given thickness and width onto an inner surface of a turnup ply member to be wound.
(a) A first embodiment of the method is described with reference to Figs. 7-10 showing an upper-half section of a main part to be assembled.

In Fig. 7, numeral 11 is a rotatable forming drum having a cylindrical shape at an outer surface, which comprises a freely enlargeable main drum 12 and a pair of auxiliary drums 13, 14 located adjacent to both side of the main drum and provided at their outer periphery in radial direction with freely expandable bladders 15, 16. These bladders 15, 16 are expanded or contracted by supplying a pressurized fluid such as pressurized air or the like to the inside of the bladder 15, 16 or discharging from the inside through passages 17, 18 communicating to the insides of the bladders 15, 16. The diameter of the main drum before the enlargement is substantially the same as the diameter of the auxiliary drum at the contracted state. In the illustrated embodiment, the diameter of the main drum is larger by 2 2 times of a thickness of a down ply segment member 4-2' than the diameter of the auxiliary drum. These main and auxiliary drums 12, 13, 14 are rotated together. Moreover, symbol CL is a rotating axial line.

A pair of down ply segment members 4-2' obtained by cutting a continuous down ply member into a length equal to the outer peripheral length of the auxiliary drum 13, 14 are supplied onto the auxiliary drums 13, 14 through a servicer (not shown) serving as a guide means for exact positioning and closely wound on the outer peripheral surfaces thereof in the forming drum 11 rotating at a state before the enlargement of the main drum 12 and the expansion (contracted state) of the auxiliary drums 13, 14. The winding operations of the down ply segment members may be conducted simultaneously or at a somewhat time lag. After the winding, both edges are joined to each other by butt-joining or overlap joining. Moreover, the position of edge at inner side of the winding down ply segment member 4-2' is determined according to the setting of edge position in the tire product, so that it may be shifted from the position shown in Fig. 7 in left and right directions in accordance with the kind of the tire.

Next, a continuous turnup ply member 4-1' having a width wider than the width of the main drum is supplied to the rotating drum 11 through a servicer (not shown) serving as a guide means for exact positioning in order to ensure supply position of dividing the width of the ply member into equal parts with respect to the center peripheral line of the main drum in widthwise direction and hold a given overlapping width W with the outer peripheral surface of the down ply segment member 4-2' and wound closely thereonto by a round and thereafter cut by means of an electric heating cutter to join both edges to each other by butt joining or overlap joining. Moreover, the width of the main drum 12 is set based on the length of arc-shaped turnup ply 4-1 between a pair of bead cores 5 in the tire product.

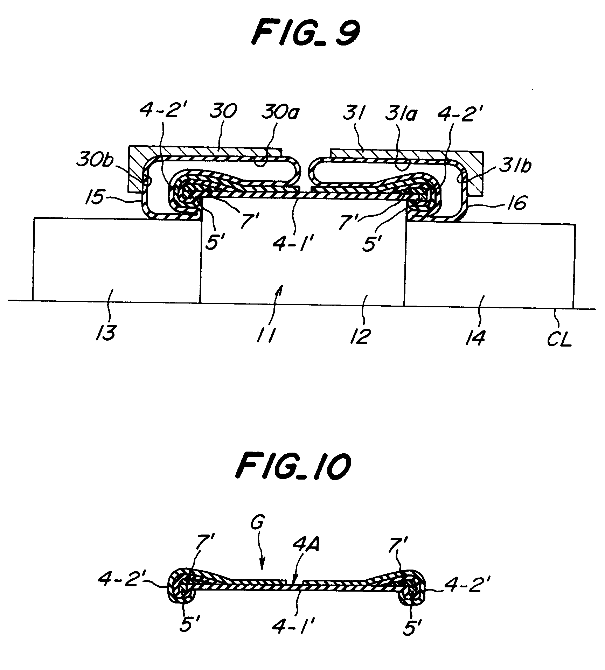

As shown in Fig. 8, the main drum 12 is enlarged in the radial direction. In hits case, the each of the auxiliary drums is maintained at the contract state. Moreover, the enlarging quantity of the main drum is larger than the maximum winding diameter of the overlapped ply members on the auxiliary drum 13, 14 or the winding diameter of the turnup ply member 4-1' as shown in Fig. 7, which corresponds to at least a quantity enough to form a step portion 19a capable of including a bead core member 5'. Such a step portion 19a may be formed by ply-squeezing means (not shown) after the enlargement of the main drum 12. Then, the bead core member 5' attached with a bead filler member 7' is placed on the ply member (turnup ply member 4-1') located on the step portion 19a in both sides of the enlarged main drum 12, respectively. A pair of the bead core members 5' provided with the bead filler member 7' are carried by a pair of supports (not shown) and then these supports are moved toward the center of the forming drum 11 from right and left side thereof to place the bead core member 5' on the step portion 19a. In this case, the rotation of the forming drum 11 may be stopped or continued. In the latter case, the support may have a freely rotatable structure.

As shown in Fig. 9, a pressurized fluid such as pressurized air is fed into the inside of the bladder 15, 16 through the passage 17, 18 to expand the bladder 15, 16 and at the same time a pair of pushing members 30, 31 each having a pair of cylindrical inner surface 30a, 31a and bottom 30b, 31b, which are alerted outside the auxiliary drums 13, 14 in the rotating axial direction thereof, are moved inward in the rotating axial direction, respectively, during which the expanded bladders 15, 16, the down ply segment members 4-2' and the turnup ply member 4-1' located on the outer peripheral surface of the bladder are forcedly compression-deformed inward in the same rotating axial direction by the inner surfaces 30a, 31a and the bottoms 30b, 31b of the pushing members 30, 31. Since the bead core member 5' is at a fixed state on the step portion 19a, only the portions of the ply members 4-1' and 4-2' located on the expanded bladder 15, 16 are forcedly subjected to compression deformation, so that the portions of the ply members 4-1' and 4-2' located outside the bead core member 5' are turned around the bead core member 5' so as to envelop the bead filler member 7' and sufficiently adhered under the action of the pressurized air.

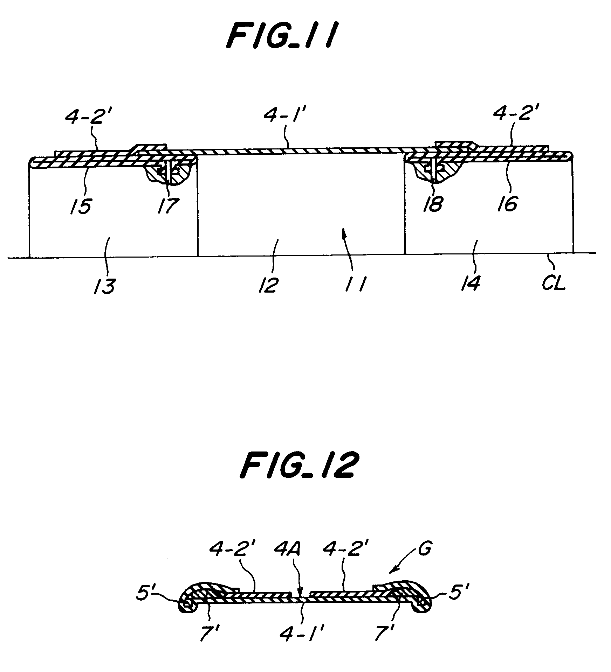

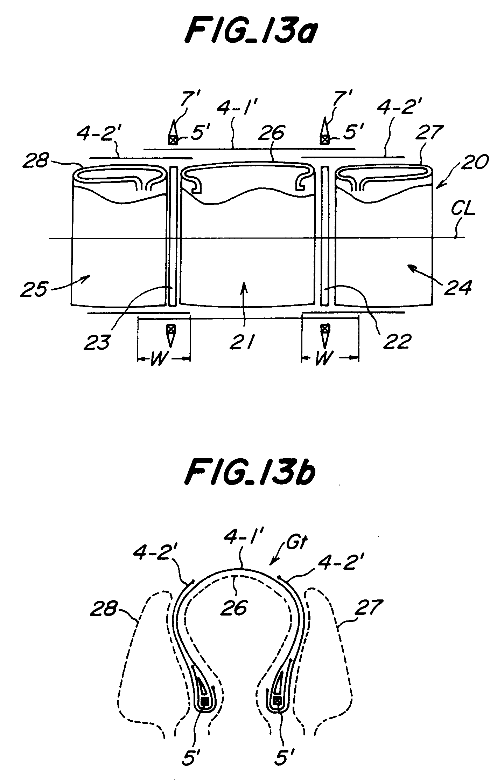

Then, the pushing members 30, 31 are retracted to original altering position, while the pressurized air is discharged from the inside of the bladder 15, 16 and at the same time the main drum 12 is contracted to original position. Thereafter, the thus formed cylindrical green case G for an uncured tire is taken out from the forming drum 11 and transferred to subsequent step through transferring means (not shown). The taken green case G is shown in Fig. 10, in which symbol 4A is a ring-shaped recess formed between a pair of down ply segment members 4-2'. Ten tires of Example 1 are manufactured by this method.
(b) A second embodiment of the method is described with reference to Figs. 11-12 showing the same section as in the first embodiment. In this embodiment, a turnup ply member 4-1' having a width wider than the width of the main drum 12, which is cut out from a continuous ply member into a length equal to the outer peripheral length of the main drum 12, is first wound on the main drum 12 so as to distribute on both sides of the main drum with respect to a widthwise central periphery thereof at an equal width and then both free ends thereof are joined to each other. Then, a pair of continuous down ply segment members 4-2' are piled on both side portions of the turnup ply member 4-1' at a given overlap width W and wound around the auxiliary drums 13, 14 by a round and cut to join both free cut ends to each other. This embodiment provides a cylindrical green case G for an uncured tire shown in Fig. 12 according to the same forming method as in the above item (a) except that the position of inner edge of the down ply segment member 4-2' is separated outward from both side edges of the main drum 12 in addition to the aforementioned point. In this case, it is preferable that the outer diameters of the main and auxiliary drums 12, 13, 14 are the same. Ten tires of each of Examples 2, 3 and 4 are manufactured by this method.
(c) In a third embodiment, a pair of down ply segment members 4-2' each having a length equal to the outer peripheral length of the auxiliary drum 13, 14 are piled on lower surfaces of both side portions of a continuous turnup ply member 4-1' between a feeding end of the servicers (not shown) possessing a positioning guide function for the ply member 4-1', 4-2' and the outer peripheral surface of the forming drum 11 before the ply members 4-1' and 4-2' are wound on the forming drum 11. The piling is carried out so as to precede the front edge of the down ply segment member 4-2' from the front edge of the turnup ply member 4-1', and the piling position is an arrangement of distributing from the widthwise center of the turnup ply member 4-1' at an equal interval. The ply members 4-1' and 4-2' overlapped at the front edge portions with each other are simultaneously wound on the forming drum, in which the turnup ply member 4-1' is wound on the main drum 12 by a round and cut to join both free cut ends to each other. Then, a cylindrical green case G for an uncured tire shown in Fig. 10 is obtained in the same manner as in the above item (a). Ten tires of Example 1 are manufactured by this method.
(d) In a fourth embodiment, a pair of continuous down ply segment members 4-2' are piled on an upper surface of a turnup ply member 4-1' having a length equal to the outer peripheral length of the main drum 12 between a feeding end of the servicers (not shown) possessing a positioning guide function for the ply member 4-1', 4-2' and the outer peripheral surface of the forming drum 11 before the ply members 4-1' and 4-2' are wound on the forming drum 11. The piling is carried out so as to precede the front edge of the turnup ply member 4-1' from the front edge of the down ply segment member 4-2', and the piling position is an arrangement of distributing from the widthwise center of the turnup ply member 4-1' at an equal interval. The ply members 4-1' and 4-2' overlapped at the front edge portions with each other are simultaneously wound on the forming drum, in which the down ply segment members 4-2' are wound on the auxiliary drums 13, 14 by a round and cut to join both free cut ends to each other. Then, a cylindrical green case G for an uncured tire shown in Fig. 12 is obtained in the same manner as in the above item (b). Ten tires of each of Examples 2, 3 and 4 are manufactured by this method.
(e) In a fifth embodiment, a composite ply member is previously formed by attaching a pair of down ply segment members 4-2' to a lower or upper surface of a turnup ply member 4-1', which is supplied onto the forming drum 11 through the servicer and wound by a round and cut to join both free cut ends to each other. In this case, it is applicable to match the length of the composite ply member with the outer peripheral length of the main drum 12 by cutting a continuous ply member or to use the continuous ply member as it is. In this embodiment, either of the methods described in the above items (a) and (b) can be applied in accordance with the attaching of the down ply segment member 4-2' to the lower or upper surface of the turnup ply member 4-1'. Ten tires of each of Examples 5 and 6 are manufactured by this method.
(f) A sixth embodiment of the method is described with reference to Fig. 13a showing a side view partly shown in section of a main part to be assembled and Fig. 13b showing a section of a green case just before the completion of the assembling.

In Fig. 13a, numeral 20 is a rotatable forming drum having a cylindrical shape at an outer surface thereof, which comprises a freely expansion deformable main drum 21, a pair of freely enlargeable pushing members 22, 23 located adjacent to both sides of the main drum and a pari of a freely expansion deformable auxiliary drums 24, 25 located adjacent to both sides of the pushing members. The main and auxiliary drums 21, 24, 25 are provided at their outer peripheries with bladders 26, 27, 28 freely expandable in radial direction, respectively. These bladders can be expanded or contracted by supply or discharge of a pressurized fluid such as pressurized air into or from the inside of the bladder 26, 27, 28. The main and auxiliary drums have approximately the same outer diameter before the expansion, and the main and auxiliary drums 21, 24 and 25 and the pushing members 22 and 23 are rotatable together around the rotating axial line CL by driving motors (not shown).

A pair of down ply segment members 4-2' obtained by cutting a continuous down ply member into a length equal to the outer peripheral length of the auxiliary drum 24, 25 are supplied onto the auxiliary drums 24, 25 through a servicer (not shown) serving as a guide means for exact positioning and closely wound on the outer peripheral surfaces thereof in the forming drum 20 rotating at a state before the expansions of the main and auxiliary drums 21, 24, 25 (contracted state of Fig. 13a). The winding operations of the down ply segment members may be conducted simultaneously or at a somewhat time lag. After the winding, both edges are joined to each other by butt-joining or overlap joining. Moreover, the position of edge at inner side of the winding down ply segment member 4-2' is determined according to the setting of edge position in the tire product, so that it may be shifted from the position shown in Fig. 13a in left and right directions in accordance with the kind of the tire.

Next, a continuous turnup ply member 4-1' having a width wider than the width of the main drum is supplied to the rotating main drum 21 through a servicer (not shown) serving as a guide means for exact positioning in order to ensure supply position of dividing the width of the ply member into equal parts with respect to the center peripheral line of the main drum in widthwise direction and hold a given overlapping width W with the outer peripheral surface of the down ply segment member 4-2' and wound closely thereonto by a round and thereafter cut by means of an electric heating cutter to join both edges to each other by butt joining or overlap joining. Moreover, the width of the main drum 21 is set based on the length of arc-shaped turnup ply 4-1 between a pair of bead cores 5 in the tire product.

After the completion of the winding operations, a pari of supports (not shown) carrying a bead core member 5' provided with a bead filler member 7' are moved toward a central portion of the forming drum 20 from right and left sides thereof and stopped at positions corresponding to the pushing members 22, 23 arranged for pushing the inner peripheral surface of the bead core member 5'as shown in Fig. 13a. In this case, the rotation of the forming drum 20 may be stopped or continued. Then, the pushing members 22, 23 are enlarged to strongly sandwich the ply members 4-1' and 4-2' between the outer peripheral surface of the pushing member and the inner peripheral surface of the bead core member 5'.

As shown in Fig. 13b, the bladders 26, 27, 28 are expanded outward in the radial direction by filling a pressurized air into the inside of the bladder on the main and auxiliary drums and at the same time the pair of the pushing members 22, 23 are moved inward in the rotating axial direction at the pushed state and stopped to given positions. At this time, a pair of bladder pushing members (not shown) alerted outside the auxiliary drums 24, 25 are moved inward to contact with the bladders 27, 28, respectively. Further, the forcedly deformation of the bladders 27, 28 by inward moving of the pushing members is continued until the ply members located on the outer peripheral surfaces of the auxiliary drums 24, 25 are sufficiently adhered to both side portions of the toroidally expansion deformed turnup ply member 4-1'. Thus, the portions of the ply members 4-1', 4-2' located outside the bead core member 5' are simultaneously turned around the bead core member 5' and sufficiently adhered by the action of pressurized air Moreover, each bladder is shown by dotted lines in Fig. 13b.

Then, the bladder-pushing members are retracted to original altering position, while the pressurized air is discharged from the inside of the bladder 26, 27, 28 at the pushed state of the pushing members 22, 23 and then the pushing members 22, 23 are contracted to original positions. Thereafter, the thus formed toroidal green case Gt for an uncured tire is taken out from the forming drum 20 and transferred to subsequent step. Ten tires of Example 1 are manufactured by using this green case Gt.
(g) In a seventh embodiment, a turnup ply member 4-1' having a width wider than the width of the main drum 21, which is cut out from a continuous ply member into a length equal to the outer peripheral length of the main drum 21, is first wound on the main drum 21 so as to distribute on both sides of the main drum with respect to a widthwise central periphery thereof at an equal width and then both free ends thereof are joined to each other. Then, a pair of continuous down ply segment members 4-2' are piled on both side portions of the turnup ply member 4-1' at a given overlap width W and wound around the auxiliary drums 24, 25 by a round and cut to join both free cut ends to each other. This embodiment provides a toroidal green case Gt for an uncured tire shown in Fig. 13b according to the same forming method as in the above item (f) except that the position of inner edge of the down ply segment member 4-2' is separated outward from both side edges of the main drum 21 in addition to the aforementioned point. Ten tires of each of Examples 2, 3 and 4 are manufactured by using this green case Gt.
(h) In an eighth embodiment, a pair of down ply segment members 4-2' each having a length equal to the outer peripheral length of the auxiliary drum 24, 25 are piled on lower surfaces of both side portions of a continuous turnup ply member 4-1' between a feeding end of the servicers (not shown) possessing a positioning guide function for the ply member 4-1', 4-2' and the outer peripheral surface of the forming drum 20 before the ply members 4-1' and 4-2' are wound on the forming drum 20. The piling is carried out so as to precede the front edge of the down ply segment member 4-2' from the front edge of the turnup ply member 4-1', and the piling position is an arrangement of distributing from the widthwise center of the turnup ply member 4-1' at an equal interval. The ply members 4-1' and 4-2' overlapped at the front edge portions with each other are simultaneously wound on the forming drum 20, in which the turnup ply member 4-1' is wound on the main drum 21 by a round and cut to join both free cut ends to each other. Then, a toroidal green case Gt for an uncured tire shown in Fig. 13b is obtained in the same manner as in the above item (f). Ten tires of Example 1 are manufactured by using this green case Gt.
(i) In a ninth embodiment, a pair of continuous down ply segment members 4-2' are piled on an upper surface of a turnup ply member 4-1' having a length equal to the outer peripheral length of the main drum 21 between a feeding end of the servicers (not shown) possessing a positioning guide function for the ply member 4-1', 4-2' and the outer peripheral surface of the forming drum 20 before the ply members 4-1' and 4-2' are wound on the forming drum 20. The piling is carried out so as to precede the front edge of the turnup ply member 4-1' from the front edge of the down ply segment member 4-2', and the piling position is an arrangement of distributing from the widthwise center of the turnup ply member 4-1' at an equal interval. The ply members 4-1' and 4-2' overlapped at the front edge portions with each other are simultaneously wound on the forming drum 20, in which the down ply segment members 4-2' are wound on the auxiliary drums 24, 25 by a round and cut to join both free cut ends to each other. Then, a toroidal green case Gt for an uncured tire shown in Fig. 13b is obtained in the same manner as in the above item (g). Ten tires of each of Examples 2, 3 and 4 are manufactured by using this green case Gt.
(j) In a tenth embodiment, a composite ply member is previously formed by attaching a pair of down ply segment members 4-2' to a lower or upper surface of a turnup ply member 4-1', which is supplied onto the forming drum 20 through the servicer and wound by a round and cut to join both free cut ends to each other. In this case, it is applicable to match the length of the composite ply member with the outer peripheral length of the main drum 21 by cutting a continuous ply member or to use the continuous ply member as it is. In this embodiment, either of the methods described in the above items (f) and (g) can be applied in accordance with the attaching of the down ply segment member 4-2' to the lower or upper surface of the turnup ply member 4-1'. Ten tires of each of Examples 5 and 6 are manufactured by using this green case Gt.

When an uncured rubber composition having an adequate tackiness is used as rubber for the rubberized ply for the ply members 4-1', 4-2' used in the above embodiments (a)-(j), the troublesome stitching operation can be omitted. If the stitching operation is required, it can be simplified. In the production method according to the invention, a considerably high productivity for the production of the green case can be realized as compared with the conventional techniques. Furthermore, there is no occurrence of rejects in the vulcanization building of the tires described in all examples as well as the other production steps.

As mentioned above, the invention can provide pneumatic radial tires having a carcass structure capable of sufficiently developing excellent steering stability, good ride comfortability against vibrations and more weight reduction. Furthermore, the degradation of productivity in the assembling of the green case according to the conventional technique can be prevented by such a special carcass structure for the tire, so that there can be provided a method of assembling the green case used for the production of the radial tire with a high productivity in high efficiency and precision.

## Claims

1. In a pneumatic radial tire comprising a pair of bead portions, a pair of sidewall portions, a tread portion toroidally extending between the sidewall portions, a radial carcass of plural rubberized plies extending between bead cores of the bead portions, and a belt of two cross cord layers superimposed about a crown portion of the carcass and reinforcing the tread portion, the improvement wherein at least one carcass ply of the rubberized plies is wound around a bead core from inside of the tire toward outside thereof to form a turnup portion as a turnup ply extending between a pair of the bead cores, and the remaining carcass ply is a center-hollow down ply constituted with a pair of rubberized ply segments in which each ply segment is arranged outside the turnup ply and extends from a position corresponding to each side region of the tread portion other than a central region thereof beneath an inner surface of the belt over an upper end of the turnup portion up to at least a position corresponding to a side edge of an inner peripheral surface of the bead core.

2. A method of producing a green case used in the production of a pneumatic radial tire as claimed in claim 1, which comprises assembling uncured members of rubberized cord plies and bead core for the tire on an outer peripheral surface of a forming drum consisting of a freely enlargeable main drum and a pair of auxiliary drums located adjacent to both sides of the main drum and freely expanding in a radial direction in which the main drum and auxiliary drums are rotated at the same outer diameter before the enlargement and the expansion, winding a pair of down ply segment members each having a length equal to an outer peripheral length of the auxiliary drum on the auxiliary drums, respectively, distributing a continuous turnup ply member having a width wider than a width of the main drum on both sides of the main drum with respect to a widthwise central periphery thereof at an equal width and winding around the down ply segment members by a round to join both free cut ends to each other, enlarging the main drum to a diameter larger than a maximum wound diameter of the ply segment member on the auxiliary drum to place a pair of bead core members on ply member portions laid on both stepped side portions of the enlarged main drum, expanding the auxiliary drum and at the same time moving a pair of cylindrical pushing members alerted outside each auxiliary drum in a rotating axial direction thereof inward in the rotating axial direction to forcedly conduct compression deformation of the expanded auxiliary drum inward in the rotating axial direction, whereby each ply member located outside the bead core is turned around the bead core to form a cylindrical green case for an uncured tire.

3. A method of producing a green case used in the production of a pneumatic radial tire as claimed in claim 1, which comprises assembling uncured members of rubberized cord plies and bead core for the tire on an outer peripheral surface of a forming drum consisting of a freely enlargeable main drum and a pair of auxiliary drums located adjacent to both sides of the main drum and freely expanding in a radial direction in which the main drum and auxiliary drums are rotated at the same outer diameter before the enlargement and the expansion, distributing a turnup ply member having a length equal to an outer peripheral length of the main drum and a width wider than a width of the main drum on both sides of the main drum with respect to a widthwise central periphery thereof at an equal width and wound on the main drum, piling a pair of continuous down ply segment members on both end portions of the turnup ply member and winding on the auxiliary drums by a round to join both free cut ends of the down ply segment member to each other, enlarging the main drum to a diameter larger than a maximum wound diameter of the ply segment member on the auxiliary drum to place a pair of bead core members on ply member portions laid on both stepped side portions of the enlarged main drum, expanding the auxiliary drum and at the same time moving a pair of cylindrical pushing members alerted outside each auxiliary drum in a rotating axial direction thereof inward in the rotating axial direction to forcedly conduct compression deformation of the expanded auxiliary drum inward in the rotating axial direction, whereby each ply member located outside the bead core is turned around the bead core to form a cylindrical green case for an uncured tire.

4. A method of producing a green case used in the production of a pneumatic radial tire as claimed in claim 1, which comprises assembling uncured members of rubberized cord plies and bead core for the tire on an outer peripheral surface of a forming drum consisting of a freely enlargeable main drum and a pair of auxiliary drums located adjacent to both sides of the main drum and freely expanding in a radial direction in which the main drum and auxiliary drums are rotated at the same outer diameter before the enlargement and the expansion, piling a pair of down ply segment members each having a length equal to an outer peripheral length of the auxiliary drum on lower surfaces of both sides of a continuous turnup ply member having a width wider than a width of the main drum while the turnup ply member is distributed on both sides of the main drum with respect to a widthwise central periphery thereof at an equal width, winding them together by a round of the turnup ply member to join both free cut ends of the turnup ply member to each other, enlarging the main drum to a diameter larger than a maximum wound diameter of the ply segment member on the auxiliary drum to place a pair of bead core members on ply member portions laid on both stepped side portions of the enlarged main drum, expanding the auxiliary drum and at the same time moving a pair of cylindrical pushing members alerted outside each auxiliary drum in a rotating axial direction thereof inward in the rotating axial direction to forcedly conduct compression deformation of the expanded auxiliary drum inward in the rotating axial direction, whereby each ply member located outside the bead core is turned around the bead core to form a cylindrical green case for an uncured tire.

5. A method of producing a green case used in the production of a pneumatic radial tire as claimed in claim 1, which comprises assembling uncured members of rubberized cord plies and bead core for the tire on an outer peripheral surface of a forming drum consisting of a freely enlargeable main drum and a pair of auxiliary drums located adjacent to both sides of the main drum and freely expanding in a radial direction in which the main drum and auxiliary drums are rotated at the same outer diameter before the enlargement and the expansion, piling a pair of continuous down ply segment members on upper surfaces of both sides of a turnup ply member having a length equal to an outer peripheral length of the main drum and a width wider than a width of the main drum while the turnup ply member is distributed on both sides of the main drum with respect to a widthwise central periphery thereof at an equal width, winding them together by a round of the down ply segment member to join both free cut ends of the down ply segment member to each other, enlarging the main drum to a diameter larger than a maximum wound diameter of the ply segment member on the auxiliary drum to place a pair of bead core members on ply member portions laid on both stepped side portions of the enlarged main drum, expanding the auxiliary drum and at the same time moving a pair of cylindrical pushing members alerted outside each auxiliary drum in a rotating axial direction thereof inward in the rotating axial direction to forcedly conduct compression deformation of the expanded auxiliary drum inward in the rotating axial direction, whereby each ply member located outside the bead core is turned around the bead core to form a cylindrical green case for an uncured tire.

6. A method of producing a green case used in the production of a pneumatic radial tire as claimed in claim 1, which comprises assembling uncured members of rubberized cord plies and bead core for the tire on an outer peripheral surface of a forming drum consisting of a freely enlargeable main drum and a pair of auxiliary drums located adjacent to both sides of the main drum and freely expanding in a radial direction in which the main drum and auxiliary drums are rotated at the same outer diameter before the enlargement and the expansion, winding a composite ply member formed by sticking both end portions of a turnup ply member with end portions of a pair of down ply segment members at a given overlapping quantity by a round to join both free ends to each other, enlarging the main drum to a diameter larger than a maximum wound diameter of the ply segment member on the auxiliary drum to place a pair of bead core members on ply member portions laid on both stepped side portions of the enlarged main drum, expanding the auxiliary drum and at the same time moving a pair of cylindrical pushing members alerted outside each auxiliary drum in a rotating axial direction thereof inward in the rotating axial direction to forcedly conduct compression deformation of the expanded auxiliary drum inward in the rotating axial direction, whereby each ply member located outside the bead core is turned around the bead core to form a cylindrical green case for an uncured tire.

7. A method of producing a green case used in the production of a pneumatic radial tire as claimed in claim 1, which comprises assembling uncured members of rubberized cord plies and bead core for the tire on an outer peripheral surface of a forming drum consisting of a freely deformable main drum expanded by filling of pressurized fluid, a pair of freely enlargeable pushing members against an inner peripheral surface of a bead core member located adjacent to both sides of the main drum and a pair of freely deformable auxiliary drums located adjacent to the pushing members and expanded by filling of pressurized fluid in which the main drum, auxiliary drums and pushing members are rotated at the same outer diameter before the enlargement and the expansion, winding a pair of down ply segment members each having a length equal to an outer peripheral length of the auxiliary drum on the auxiliary drums, respectively, distributing a continuous turnup ply member having a width wider than a width of the main drum on both sides of the main drum with respect to a widthwise central periphery thereof at an equal width and winding around the down ply segment members by a round to join both free cut ends to each other, enlarging the pushing members to strongly sandwich the ply members between the outer peripheral surface of the enlarged pushing member and the inner peripheral surface of the bead core member, and at the same time filling a pressurized fluid in each of the drums to expandably deform the drums, and moving the pushing members inward in a rotating axial direction of the drum to narrow a distance between the pair of the bead core members and a distance between the pair of the auxiliary drums, whereby the ply members located outside the bead core member are turned around the bead core member by the expansion deformed portion of the auxiliary drum and the turned ply member portions are pressed on the ply member existing on the main drum to form a toroidal green case for an uncured tire.

8. A method of producing a green case used in the production of a pneumatic radial tire as claimed in claim 1, which comprises assembling uncured members of rubberized cord plies and bead core for the tire on an outer peripheral surface of a forming drum consisting of a freely deformable main drum expanded by filling of pressurized fluid, a pair of freely enlargeable pushing members against an inner peripheral surface of a bead core member located adjacent to both sides of the main drum and a pair of freely deformable auxiliary drums located adjacent to the pushing members and expanded by filling of pressurized fluid in which the main drum, auxiliary drums and pushing members are rotated at the same outer diameter before the enlargement and the expansion, distributing a turnup ply member having a length equal to an outer peripheral length of the main drum and a width wider than a width of the main drum on both sides of the main drum with respect to a widthwise central periphery thereof at an equal width and winding on the main drum, piling a pair of continuous down ply segment members on both end portions of the turnup ply member and winding on the auxiliary drums by a round to join both free cut ends of the down ply segment member to each other, enlarging the pushing members to strongly sandwich the ply members between the outer peripheral surface of the enlarged pushing member and the inner peripheral surface of the bead core member, and at the same time filling a pressurized fluid in each of the drums to expandably deform the drums, and moving the pushing members inward in a rotating axial direction of the drum to narrow a distance between the pair of the bead core members and a distance between the pair of the auxiliary drums, whereby the ply members located outside the bead core member are turned around the bead core member by the expansion deformed portion of the auxiliary drum and the turned ply member portions are pressed on the ply member existing on the main drum to form a toroidal green case for an uncured tire.

9. A method of producing a green case used in the production of a pneumatic radial tire as claimed in claim 1, which comprises assembling uncured members of rubberized cord plies and bead core for the tire on an outer peripheral surface of a forming drum consisting of a freely deformable main drum expanded by filling of pressurized fluid, a pair of freely enlargeable pushing members against an inner peripheral surface of a bead core member located adjacent to both sides of the main drum and a pair of freely deformable auxiliary drums located adjacent to the pushing members and expanded by filling of pressurized fluid in which the main drum, auxiliary drums and pushing members are rotated at the same outer diameter before the enlargement and the expansion, piling a pair of down ply segment members each having a length equal to an outer peripheral length of the auxiliary drum on lower surfaces of both sides of a continuous turnup ply member having a width wider than a width of the main drum while the turnup ply member is distributed on both sides of the main drum with respect to a widthwise central periphery thereof at an equal width, winding them together by a round of the turnup ply member to join both free cut ends of the turnup ply member to each other, enlarging the pushing members to strongly sandwich the ply members between the outer peripheral surface of the enlarged pushing member and the inner peripheral surface of the bead core member, and at the same time filling a pressurized fluid in each of the drums to expandably deform the drums, and moving the pushing members inward in a rotating axial direction of the drum to narrow a distance between the pair of the bead core members and a distance between the pair of the auxiliary drums, whereby the ply members located outside the bead core member are turned around the bead core member by the expansion deformed portion of the auxiliary drum and the turned ply member portions are pressed on the ply member existing on the main drum to form a toroidal green case for an uncured tire.

10. A method of producing a green case used in the production of a pneumatic radial tire as claimed in claim 1, which comprises assembling uncured members of rubberized cord plies and bead core for the tire on an outer peripheral surface of a forming drum consisting of a freely deformable main drum expanded by filling of pressurized fluid, a pair of freely enlargeable pushing members against an inner peripheral surface of a bead core member located adjacent to both sides of the main drum and a pair of freely deformable auxiliary drums located adjacent to the pushing members and expanded by filling of pressurized fluid in which the main drum, auxiliary drums and pushing members are rotated at the same outer diameter before the enlargement and the expansion, piling a pair of continuous down ply segment members on upper surfaces of both sides of a turnup ply member having a length equal to an outer peripheral length of the main drum and a width wider than a width of the main drum while the turnup ply member is distributed on both sides of the main drum with respect to a widthwise central periphery thereof at an equal width, winding them together by a round of the down ply segment member to join both free cut ends of the down ply segment member to each other, enlarging the pushing members to strongly sandwich the ply members between the outer peripheral surface of the enlarged pushing member and the inner peripheral surface of the bead core member, and at the same time filling a pressurized fluid in each of the drums to expandably deform the drums, and moving the pushing members inward in a rotating axial direction of the drum to narrow a distance between the pair of the bead core members and a distance between the pair of the auxiliary drums, whereby the ply members located outside the bead core member are turned around the bead core member by the expansion deformed portion of the auxiliary drum and the turned ply member portions are pressed on the ply member existing on the main drum to form a toroidal green case for an uncured tire.

11. A method of producing a green case used in the production of a pneumatic radial tire as claimed in claim 1, which comprises assembling uncured members of rubberized cord plies and bead core for the tire on an outer peripheral surface of a forming drum consisting of a freely deformable main drum expanded by filling of pressurized fluid, a pair of freely enlargeable pushing members against an inner peripheral surface of a bead core member located adjacent to both sides of the main drum and a pair of freely deformable auxiliary drums located adjacent to the pushing members and expanded by filling of pressurized fluid in which the main drum, auxiliary drums and pushing members are rotated at the same outer diameter before the enlargement and the expansion, winding a composite ply member formed by sticking both end portions of a turnup ply member with end portions of a pair of down ply segment members at a given overlapping quantity by a round to join both free ends to each other, enlarging the pushing members to strongly sandwich the ply members between the outer peripheral surface of the enlarged pushing member and the inner peripheral surface of the bead core member, and at the same time filling a pressurized fluid in each of the drums to expandably deform the drums, and moving the pushing members inward in a rotating axial direction of the drum to narrow a distance between the pair of the bead core members and a distance between the pair of the auxiliary drums, whereby the ply members located outside the bead core member are turned around the bead core member by the expansion deformed portion of the auxiliary drum and the turned ply member portions are pressed on the ply member existing on the main drum to form a toroidal green case for an uncured tire.
